# EUROPÄISCHE PATENTSCHRIFT

(11) **EP 0 472 674 B1**
(45) Veröffentlichungstag und Bekanntmachung des Hinweises auf die Patenterteilung: **22.02.1995**
(21) Anmeldenummer: 91902941.3
(22) Anmeldetag: 18.01.1991
(51) Int. Cl.: G01C 25/00, G01C 9/00

(54) **NEIGUNGSMESSVORRICHTUNG**
CLINOMETER
CLINOMETRE

(30) Priorität: 29.01.1990 DE 4002493
(43) Veröffentlichungstag der Anmeldung: 04.03.1992
(73) Patentinhaber: Bergwerksverband GmbH, D-45307 Essen (DE)
(72) Erfinder: Schäfler, Reinhard, W-8992 Wasserburg (DE)
(74) Vertreter: Behrendt, Arne, Dipl.-Ing.
(86) Internationale Anmeldenummer: EP9100087
(87) Internationale Veröffentlichungsnummer: WO9111684

(56) Entgegenhaltungen:
- EP-A- 0 155 922
- DE-A- 2 166 249
- DE-A- 3 438 728

## Beschreibung

Die Erfindung betrifft eine Neigungsmenvorrichtung für die Bestimmung der Neigung von neigungssensiblen Bauwerken, Anlagen oder Maschinen, mit einer Basis, auf der eine mindestens einen Neigungsmesser tragende Trägerplatte mittels dreier Stützfüße in jeweils um 180° gegeneinander verdrehten Meßlagen in Richtung von Meßachsen X+ und X- bzw. Y+ und Y- abstützbar ist, wobei der Basis Führungseinrichtungen zugeordnet sind, die die Stützfüße der Trägerplatte beim Aufsetzen auf die Stützflächen der Basis in definierte, reproduzierbare Stellungen führen.

Die bekannten Vorrichtungen der genannten Art sind mit Neigungsmessern unterschiedlicher Bauart versehen, wie z. B. Pendelneigungsmessern, Servobeschleunigungsmessern oder Elektrolytlibellen. Alle diese Neigungsmesser weisen neben den temperaturabhängigen Nullpunktsdriften und Skalenfaktoränderungen auch alterungsbedingte Veränderungen auf, die zufälliger Natur sind und nicht modellierbar sind. Um diesem Mangel abzuhelfen. werden für hohe Genauigkeitsansprüche sogenannte Umschlagsmessungen in zwei um 180° versetzten Lagen durchgeführt und die Neigung über Differenzbildung der Einzelmeßwerte ermittelt. Diese Umschlagsmessungen erfolgen bei Vorrichtungen der eingangs genannten Art (vgl. Prospekt der Westfälischen Berggewerkschaftskasse "Elektronische Setzlibelle ESL2a mit 2-achsiger Einpassung) diskret über manuelles Auf- und Umsetzen der Trägerplatte auf der Basis. Mit einer derartigen Umschlagsmessung lassen sich allerdings nur Nullpunktsveränderungen des Neigungsmessers ausschalten, nicht aber Veränderungen des Skalenfaktors. Um dem Fehlereinfluß der Skalenfaktoränderungen und der von Meßort zu Meßort unterschiedlichen Erdschwere g klein zu halten, können nur kleine Neigungen gemessen werden. Daraus resultiert, daß die Basis bei der Montage sehr gut horizontiert werden muß und nur kleine Neigungen hinreichend genau erfaßt werden können.

Ein weiterer Nachteil besteht darin, daß die manuelle Durchführung der Messungen eine kontinuierliche Erfassung von Neigungsänderungen außerordentlich erschwert und arbeitsaufwendig macht. Die ermittelten Meßergebnisse sind in erheblichem Maße von der Sorgfalt des Meßpersonals abhängig. Da die Basis zur Neigungsmessung freigelegt wird, können die Messungen auch durch Schmutzablagerungen verfälscht werden.

Es ist deshalb Aufgabe der Erfindung, die Vorrichtung der eingangs genannten Art dahingehend weiterzubilden, daß eine automatische Meßwerterfassung mit gleichbleibend hoher Meßgenaufgkeit, großem Meßbereich und Selbstkalibrierung von Nullpunkt, Skalenfaktor und Erdschwere g ermöglicht wird.

Zur Lösung dieser Aufgabe schlägt die Erfindung ausgehend von der Vorrichtung der eingangs genannten Art vor,
- daß die Trägerplatte als Drehtisch ausgebildet ist, der an der Basis um eine Drehachse drehbar relativ zur Drehachse kippbar und in Längsrichtung der Drehachse heb- und absenkbar gelagert ist, wobei dem Drehtisch motorische Dreh- und Hubeinrichtungen zugeordnet sind,
- und daß die Basis weitere Stützflächen zur Abstützung des Drehtisches in zwei weiteren um 180° gegeneinander verdrehten Meßlagen in Richtung von Kalibriermeßachsen K+ und K- aufweist, die mit den Meßachsen X+ und X- bzw. Y+ und Y- einen Winkel von insbesondere 45° bilden, wobei die in der Flucht der Kalibriermeßachsen K+ und K- liegenden Stützflächen gegenüber allen anderen in einer gemeinsamen Ebene liegenden Stützflächen um ein festes Maß angehoben bzw. abgesenkt sind und parallel zu der gemeinsamen Ebene verlaufen,
- und daß die Dreh- und Hubeinrichtungen und der Neigungsmesser zur Steuerung der Bewegungen des Drehtisches in den verschiedenen Meßlagen und zur Registrierung und Auswertung der vom Neigungsmesser gemessenen Meßwerte an einen Mikroprozessor angeschlossen sind.

Die Vorrichtung gemäß der Erfindung hat zunächst den Vorteil, daß sie vollautomatisch arbeitet, und zwar sowohl bei der Meßwerterfassung, als auch bei der in regelmäßigen Abständen erforderlichen Kalibrierung des Nullpunktes und des Skalenfaktors. Die hierfür erforderlichen Umschlagmessungen in den Meßachsen X+ und X- bzw. Y+ und Y- sowie den Kalibriermeßachsen K+ und K- werden von dem Mikroprozessor automatisch in der richtigen Reihenfolge gesteuert und ausgewertet. Dabei ermöglicht der mittels der motorischen Dreh- und Hubeinrichtung bewegbare Tisch in Verbindung mit den genau definierten Stützflächen der Basis und den Führungseinrichtungen die automatische Einnahme von definierten, genau reproduzierbaren Meßstellungen. Die Kalibrierung des Nullpunktes und des Skalenfaktors erfolgen anhand der ermittelten Meßwerte durch mathematische Operationen des Mikroprozessors. In den den Kalibriermeßachsen K+ und K- zugeordneten Meßstellungen erhält der Drehtisch aufgrund der unterschiedlichen Höhen der Stützflächen genau definierte, reproduzierbare Verkippungen, die als Basisgrößen für die Kalibrierung des Skalenfaktors benutzt werden. Bei der Kalibrierung des Skalenfaktors werden auch die vom Meßort abhängigen Veränderungen der Erdschwere g erfaßt.

Eine vorteilhafte Weiterbildung der Erfindung sieht vor, daß der Neigungsmesser zwei rechtwinklig zueinander verlaufende Meßachsen aufweist. Hierdurch ist es möglich, die Anzahl der erforderlichen Messungen und die Anzahl der Stützflächen der Basis gering zu halten.

Weiterhin kann zusätzlich zu dem Neigungsmesser auf dem Drehtisch ein Rate-Kreiselmeßgerät zur Nordbestimmung angeordnet sein. Durch Anordnung des Rate-Kreiselmeßgerätes auf dem Drehtisch können auch für dieses Gerät auf einfache Weise Nullpunktkorrekturen und Neubestimmungen des Skalenfaktors durch einfache Umschlagmessungen mit definierten Drehwinkeln vorgenommen werden. Mit dieser Zusatzeinrichtung kann das Gerät die drei Raumachsen des kartesischen Systems automatisch und mit hoher Genauigkeit bestimmen.

Zweckmäßig hat der Drehtisch die Form einer runden Kreisscheibe und ist am Außenumfang mit einer Verzahnung versehen, in die das Antriebsritzel eines Drehmotors eingreift, der an einem parallel zur Ebene des Drehtisches verschwenkbaren Auslegerarm gelagert ist, der zusammen mit dem Drehtisch anhebbar und absenkbar ist und derart gegenüber der Basis geführt ist, daß die Lage des Drehmotors in Bezug auf die Drehachse des Drehtisches in der angehobenen Stellung fixiert und in der abgesenkten Stellung Spiel hat. Hierdurch ist es möglich, den Motor und den Drehtisch bei angehobenem Drehtisch in einer hinreichend genauen Lagebeziehung zu halten, die sicherstellt, daß das Antriebsritzel des Drehmotors einwandfrei in die Verzahnung des Drehtisches eingreift. In der abgesenkten Stellung des Drehtisches wird diese Lagebeziehung demgegenüber freigegeben, so daß sich der Drehtisch in die durch die Führungseinrichtungen und die Stützflächen vorgegebene Stellung bewegen kann, ohne vom Antriebsritzel des Drehmotors behindert zu werden.

Die Führungseinrichtungen haben zweckmäßig an der Unterseite des Drehtisches angeordnete, nach unten vorstehende Fixierstifte, die in an der Basis befindliche, den einzelnen Meßlagen zugeordnete Nuten eingreifen und den Drehtisch exakt in der der jeweiligen Meßlage zugeordneten Drehstellung fixieren. Diese Fixierstifte haben zweckmäßig eine kegelige Spitze, damit sie sich von selbst in die Nuten einführen, nachdem der Drehtisch zuvor mittels des Drehmotors in die ungefähr richtige Drehstellung verbracht worden ist.

Zur Steuerung der Drehbewegungen des Drehtisches sind an dessen Unterseite auf den Umfang verteilte Meßmarken zur optischen Abtastung der Drehlage angeordnet. Die optische Meßeinrichtung ermöglicht es, den Drehmotor des Drehtisches so zu steuern, daß dieser jeweils vor der Absenkbewegung die ungefähr richtige Drehstellung einnimmt.

Die der Basis zugeordnete optische Meßeinrichtung weist zweckmäßig zur Drehrichtungskontrolle zwei Reflektionslichtschranken und eine darüber angeordnete Ringscheibe mit zwei Lichtspalten auf.

Die Stützfüße des Drehtisches haben kugelförmig ausgebildete untere Endflächen, während die Stützflächen der Basis als geläppte Stirnflächen von Stiften ausgebildet sind. Die kugelförmigen Stützfüße und die geläppten Stirnflächen der Stifte ermöglichen einerseits eine große Genauigkeit bei der Herstellung. Andererseits drücken sich kugelförmige Stützfüße nur wenig in die geläppten Stirnflächen ein und erzeugen an allen Stirnflächen gleichmäßige, berechenbare elastische Verformungen. Die Hubeinrichtung weist vorteilhafterweise einen mittels eines Hubmotors verschwenkbaren Hebel auf, der an der Basis gelagert ist und von unten auf einen mit dem Drehtisch verbundenen Achskörper einwirkt, der in Richtung der Drehachse verschiebbar in der Basis gelagert ist. Eine solche Hubeinrichtung ermöglicht eine hinreichend genau geführte Hub- und Absenkbewegung.

Der mit dem Drehtisch verbundene Achskörper ist hohl ausgebildet und dient als Installationskanal für an die Oberseite des Drehtisches führende elektrische Leitungen. Hierdurch ergibt sich eine weitgehend geschützte Unterbringung dieser für die Funktionsfähigkeit wichtigen Leitungen.

Durch der Basis zugeordnete Begrenzungsschalter kann die Hubbewegung der Hubeinrichtung nach oben und unten auf einfache Weise begrenzt werden.

Um die von dem Neigungsmesser erzeugten Signale digital auswerten zu können, sind dem Neigungsmesser ein Spannungsfrequenzkonverter für die Analog-Digitalumsetzung und ein 16-Bit-Zähler zugeordnet. Dabei sind der Mikroprozessor, der Spannungsfrequenzkonverter und der 16-Bit-Zähler zweckmäßig im Schutzgehäuse der Vorrichtung angeordnet. Hierdurch werden lange Signalleitungen vermieden.

Der Mikroprozessor ist für die Ausgabe der ermittelten Meßwerte und für die Entgegennahme von Steuerungssignalen zweckmäßig mit einer RS-232-Schnittstelle versehen.

Der Neigungsmesser ist vorzugsweise als Beschleunigungsmesser ausgebildet. Solche Beschleunigungsmesser liefern über einen großen Meßbereich genaue Meßwerte und sind gegen Vibrations- und Stoßeinflüsse besonders unempfindlich.

Ein Ausführungsbeispiel der Erfindung wird im folgenden anhand der Zeichnung näher erläutert. Es zeigen:

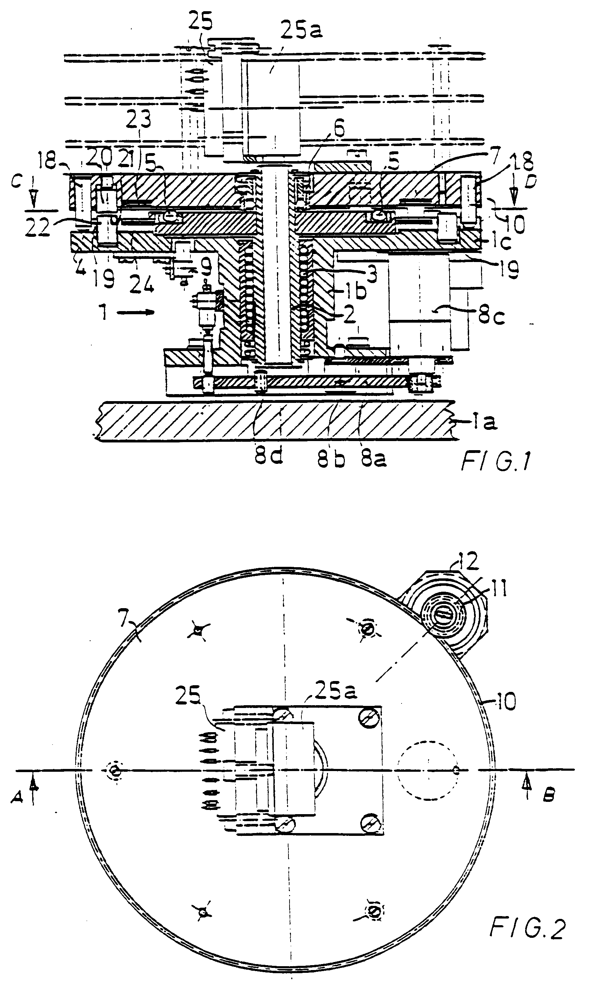

- Fig. 1: einen vertikalen Schnitt durch die Vorrichtung gemäß der Erfindung entlang der Drehachse des Drehtisches;
- Fig. 2: eine Draufsicht zu Fig. 1;

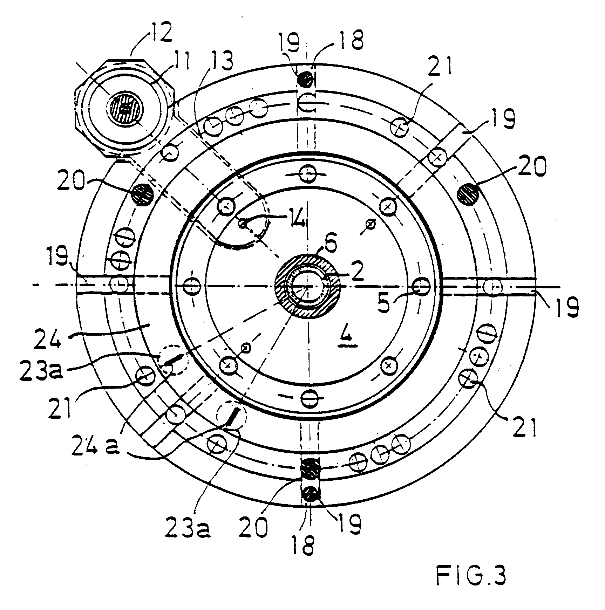

- Fig. 3: einen Schnitt entlang der Linie C-D in Fig. 1, d.h. eine Draufsicht auf die Basis;

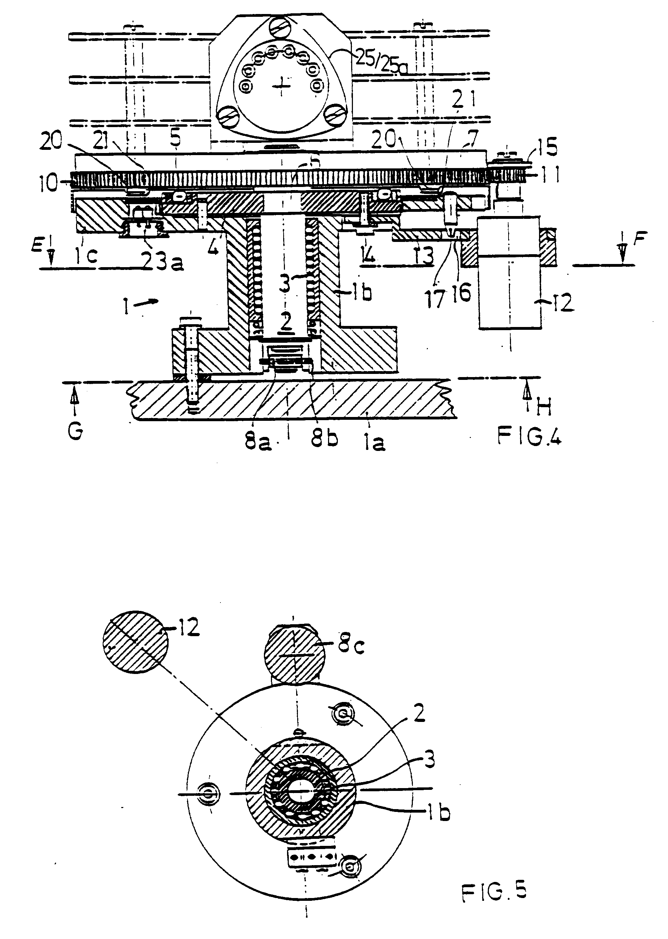

- Fig. 4: einen vertikalen Schnitt durch die Basis mit einer Seitenansicht des Drehtisches, wobei der Drehmotor um 135° versetzt dargestellt ist;
- Fig. 5: einen Schnitt entlang der Linie E-F in Fig. 3;
- Fig. 6: einen Schnitt entlang der Linie G-H n Fig. 4;
- Fig. 7: schematisch eine Draufsicht auf die Basis;
- Fig. 8: ein Blockschaltbild der Vorrichtung.

In der Zeichnung ist die Basis in ihrer Gesamtheit mit dem Bezugszeichen 1 bezeichnet. Sie besteht aus einer Basisplatte 1a, die gegebenenfalls mit dem zu messenden Bauwerk verbunden werden kann. Auf der Oberseite der Basisplatte 1a ist ein Standrohr 1b befestigt, welches oben mit einer kreisrunden Flansch platte 1c versehen ist.

In dem Standrohr 1b ist ein hohl ausgebildeter Achskörper 2 in seiner Längsrichtung verschiebbar gelagert. Um eine leichtgängige Längsverschiebung des Achskörpers 2 zu erreichen, ist dieser mittels einer Kugelführung 3 an der Innenwand des Standrohres 1b abgestützt. Unterhalb des oberen Endes des Achskörpers 2 ist dieser starr mit einer Stützscheibe 4 versehen, an deren Oberseite leicht drehbare Stützkugeln 5 gelagert sind.

An seinem oberen Ende ist der Achskörper 2 mit einem Drehlager 6 versehen, welches zur drehbaren Lagerung eines Drehtisches 7 dient, der als kreisrunde Scheibe ausgebildet ist. Das Drehlager 6 ermöglicht nicht nur ein freies Verdrehen des Drehtisches 7 um die vertikale Drehachse, sondern auch ein allseitiges Verkippen des Drehtisches 7 relativ zu seiner Drehachse.

Dem unteren Ende des Achskörpers 2 ist eine Hubvorrichtung 8 zugeordnet. Diese Hubvorrichtung 8 weist einen zweiarmigen Hebel 8a auf, der um eine horizontale Schwenkachse 8b verschwenkbar an der Basis 1 gelagert ist und an dessen einem Hebelarm das Stellglied eines Hubmotors 8c angreift, welcher ebenfalls an der Basis 1 befestigt ist. Der andere Hebelarm des Hebels 8a wirkt über einen verstellbaren Stützbolzen 8d auf das untere Ende des Achskörpers 2 ein, und zwar derart, daß der Achskörper 2 und der daran gelagerte Drehtisch 7 aus der in der Zeichnung dargestellten abgesenkten Stellung in eine angehobene Stellung vertikal angehoben werden können. In dieser angehobenen Stellung stützen die Stützkugeln 5 der Stützscheibe 4 den Drehtisch 7 von unten ab. In der abgesenkten Stellung stützt sich der Drehtisch demgegenüber über Stützfüße an der Basis 1 ab, wie weiter unten noch im einzelnen erläutert wird. Die Hubbewegungen der Hubvorrichtung 8 werden nach oben und unten durch an der Basis 1 befindliche Begrenzungsschalter 9 begrenzt.

Der Drehtisch 7 ist weiterhin am Außenumfang mit einer Verzahnung 10 versehen, in die das Antriebsritzel eines Drehmotors 12 eingreift. Der Drehmotor 12 ist an einem Auslegearm 13 befestigt, der um eine vertikale Schwenkachse 14 verschwenkbar und in vertikaler Richtung heb- und absenkbar an der Basis 1 gelagert ist. Das Antriebsritzel 11 des Drehmotors 12 ist an seiner nach oben weisenden Stirnseite mit einer Stützscheibe 15 versehen, die sich von oben her am Drehtisch 7 abstützt, so daß der Drehmotor 12 und der diesen tragende Auslegearm 13 die Hubbewegungen des Drehtisches mitmachen. Der Auslegearm 13 ist mit einer Fixieröffnung 16 versehen, in die ein mit der Basis 1 verbundener Fixierstift 17 von oben eingreift. Dieser Fixierstift 17 ist an seinem unteren Ende konisch ausgebildet, und zwar derart, daß der Auslegearm 13 sich beim Anheben an dem Fixierstift 17 ausrichtet. Auf diese Weise werden der Auslegearm 13 und der Drehmotor 12 beim Anheben des Drehtisches 7 in Bezug auf die Drehachse des Drehtisches 7 fixiert, so daß das Antriebsritzel 11 einwandfrei mit der Außenverzahnung 10 des Drehtisches kämmt. In der abgesenkten Stellung gibt der Fixierstift 17 den Auslegearm 13 demgegenüber frei, so daß sich der Drehtisch 7 unbehindert vom Drehmotor 12 an der Basis 1 ausrichten kann.

Der Drehtisch 7 ist an seiner Unterseite mit zwei ein ander diametral gegenüberliegenden Fixierstiften 18 versehen, die in an der Oberseite der Flanschplatte 1c der Basis 1 angeordnete, radial verlaufende Nuten 19 eingreifen. Beim Ausführungsbeispiel sind insgesamt sechs solche Nuten 19, d.h. drei Paare von Nuten 19 vorgesehen, die den Meßachsen X±, Y± und K± zugeordnet sind. Die Fixierstifte 18 sind am unteren Ende konisch ausgebildet, so daß sie den Drehtisch 7 beim Absenken in die vorausbestimmte Drehstellung führen.

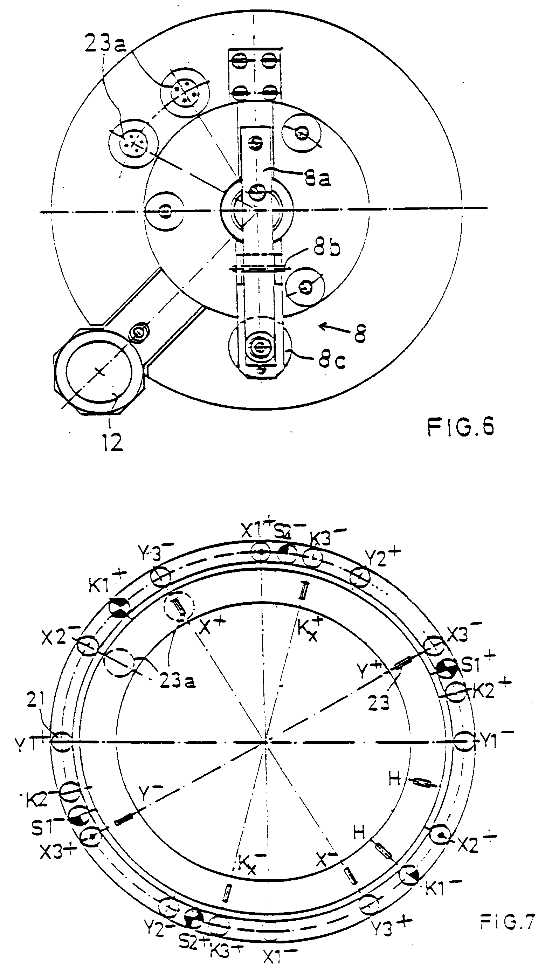

Außerdem ist der Drehtisch 7 an seiner Unterseite mit drei Stützfüßen 20 versehen, die auf der Basis 1 zugeordnete, ebene Stützflächen 21 der Basis 1 aufsetzbar sind. Die Stützfüße 20 sind an der Unterseite kugelig ausgebildet, so daß sich zwischen den Stützfüßen 20 und den Stützflächen 21 genau definierte und reproduzierbare Punktberührungen ergeben. Die ebenen Stützflächen 21 werden jeweils von geläppten Stirnflächen von Stiften 22 gebildet, die in die Basis 1 eingelassen sind. Durch die geläppten Stirnflächen 21 in Verbindung mit den kugeligen Stützfüßen 20 wird eine Aufsetzreproduzierbarkeit von weniger als 0,0001 mm erreicht. Das entspricht für eine Basislänge von 80 mm einer Neigungsreproduzierbarkeit von weniger als 0,25 Winkelsekunden. Beim Ausführungsbeispiel sind insgesamt zweiundzwanzig solcher Stützflächen 21 vorgesehen (vgl. Fig. 7). Achtzehn der Stützflächen 21 sind den sechs Meßachsen zugeordnet, und zwar
1. der Meßachse X+ die Stützflächen X1+, X2+ und X3+,
2. der Meßachse X- die Stützflächen X1-, X2- und X3-,
3. der Meßachse Y+ die Stützflächen Y1+, Y2+ und Y3+,
4. der Meßachse Y- die Stützflächen Y1-, Y2- und Y3-,
5. der Kalibriermeßachse K+ die Stützflächen K1+, K2+ und K3+,
6. der Kalibriermeßachse K- die Stützflächen K1-, K2- und K3-.

Die Meßachsen X± und Y± verlaufen rechtwinklig zueinander. Die Kalibriermeßachsen K± verlaufen in einem Winkel von 45° zu den Meßachsen X± bzw. Y±. Die den Meßachsen X± und Y± zugeordneten Stützflächen liegen in einer gemeinsamen Ebene. In der gleichen Ebene liegen auch die den Kalibriermeßachsen K± zugeordneten Stützflächen K2+ und K3+ sowie K2- und K3-. Die Stützfläche K1+, d.h. die in der Flucht der Kalibriermeßachse K+ liegende Stützfläche ist gegenüber der oben erwähnten gemeinsamen Ebene um ein bestimmtes, festes Maß angehoben und verläuft parallel zu dieser gemeinsamen Ebene, wobei der Parallelitätsfehler nicht mehr als 20 Winkelsekunden betragen soll. Die Stützfläche K1-, d.h. die in der Flucht der Kalibriermeßachse K- liegende Stützfläche ist gegenüber der oben erwähnten gemeinsamen Ebene um ein bestimmtes festes Maß abgesenkt und verläuft ebenfalls parallel zu dieser gemeinsamen Ebene, wobei der Parallelitätsfehler auch hier nicht mehr al 20 Winkelsekunden betragen soll. Infolge dieser besonderen Anordnung der Stützflächen K1+ und K1- wird der Drehtisch 7 bei Ausrichtung in die Kalibriermeßachsen K+ bzw. K- um ein genau definiertes, reproduzierbares Maß verkippt, welches als Basisgröße für die Kalibrierung des Skalenfaktors verwendet wird. Neben den bereits aufgeführten Stützflächen weist die Basis 1 noch vier weitere Stützflächen S1+ und S2+ sowie S1- und S2- auf. Diese Stützflächen dienen als Hilfsflächen bei der Herstellung, der Kalibrierung der Stützflächen K1+ und K1- und zur abschließenden Parallelitätskontrolle.

Zur Steuerung des Drehmotors 12 sind an der Unterseite des Drehtisches 7 auf den Umfang verteilte Meßmarken 23 vorgesehen, die mittels zweier an der Oberseite der Flanschplatte 1c befindlichen Reflektionslichtschranken 23a abgetastet werden können. Zwischen den Reflektionslichtschranken 23a und dem Drehtisch 7 befindet sich ein Blendenring 24 mit zwei Lichtspalten 24a. Außer den den verschiedenen Drehstellungen zugeordneten Meßmarken 23 befinden sich an dem Drehtisch 7 noch zwei Home-Meßmarken 23a, welche einen Home-Impuls nach Abschluß der Meßreihe erzeugen.

Auf der Oberseite des Drehtisches 7 ist ein Neigungsmesser 25 angeordnet. Dieser Neigungsmesser 25 ist zweckmäßig als Beschleunigungsmesser ausgebildet und arbeitet entweder in einer Meßachse oder in zwei senkrecht zueinander verlaufenden Meßachsen. Außerdem kann auf dem Drehtisch 7 ein Rate-Kreiselmeßgerät 25a für die Nordbestimmung angebracht sein. Weiterhin sind in dem nicht näher dargestellten Schutzgehäuse der Gesamtvorrichtung ein Mikroprozessor 26, ein Spannungsfrequenzkonverter 27 zur Digitalisierung der vom Neigungsmesser 25 gemessenen Werte, ein 16-Bit-Zähler 28 und verschiedene logische Schaltungen angeordnet. Die für die Signalübermittlung erforderlichen elektrischen Leitungen verlaufen durch den hohl ausgebildeten Achskörper 2.

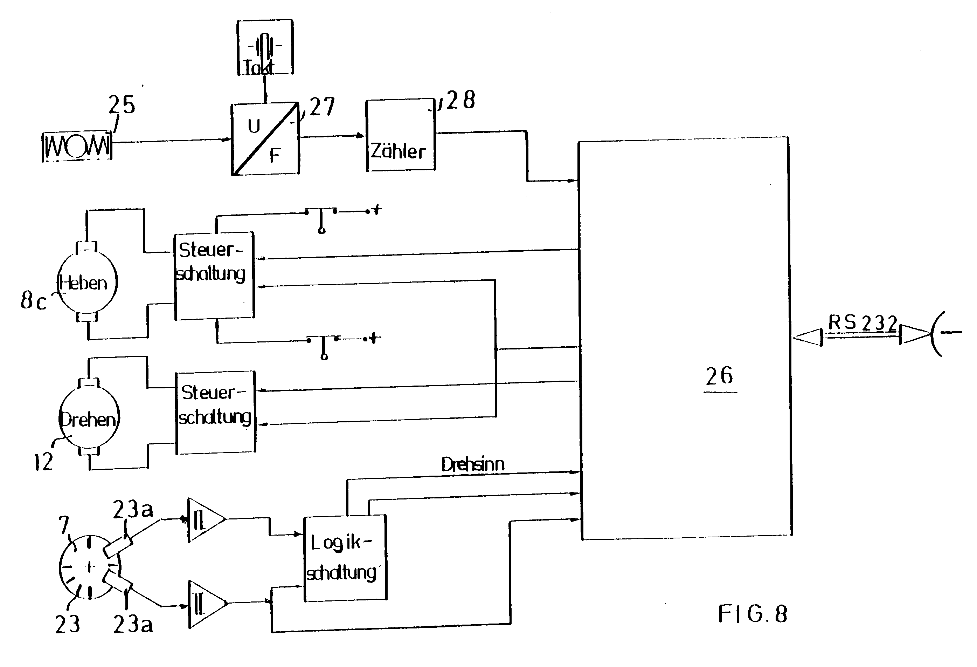

Das in Fig. 8 gezeigte Blockschaltbild zeigt den strukturellen Aufbau der Steuerschaltung, deren Steuerzentrale ein Mikroprozessor 26 mit serieller RS232-Schnittstelle für die Ausgabe der Meßdaten und die Eingabe von Steuerbefehlen ist. An den Mikroprozessor 26 ist der Beschleunigungsmesser 25 unter Zwischenschaltung des Spannungs-Frequenzkonverters 27 und des 16-Bit-Zählers 28 angeschlossen. Wie aus dem Blockschaltbild weiterhin zu ersehen ist, steuert der Mikroprozessor auch den Hubmotor 8c und den Drehmotor 12. Die Steuerung und Überwachung der verschiedenen Drehstellungen des Drehtisches 7 erfolgt mit Hilfe der Refelktionslichtschranken 23a und der Meßmarken 23.

Die Vorrichtung gemäß der Erfindung arbeitet wie folgt:

Zur Ermittlung der Nullpunktfehler und der Neubestimmung des Skalenfaktors des Neigungsmessers 25 wird der Drehtisch 7 in vorgegebenen Zeitintervallen nacheinander in die unterschiedlichen Drehpositionen gedreht und in jeder Position ein Neigungsmeßwert über eine bestimmte Zeitspanne ermittelt. Zur Umsetzung des Drehtisches 7 wird dieser über die Hubeinrichtung 8 bis zum Ansprechen des Begrenzungsschalters 9 angehoben und anschließend mit Hilfe des Drehmotors 12 mit Hilfe der optischen Abtastung der Meßmarken 23 in die ungefähre Lager der neuen Drehposition gedreht. Die exakte Drehpostion enthält der Drehtisch beim Absenken über das Eintauchen der Fixierstifte 18 in die Nuten 19. Beim Aufsetzen der Stützfüße 20 auf den geläppten Stützflächen 21 richtet sich der Drehtisch 7 durch Verkippen um seine Drehachse in der jeweils vorbestimmten Ebene mit großer Genauigkeit aus. Aus den in den jeweiligen Meßlagen ermittelten Neigungswerten können mit Hilfe von geeigneten Algorithmen die erforderlichen Nullpunktkorrekturen und Korrekturen des Skalenfaktors errechnet werden. Diese Berechnungen nimmt der Mikroprozessor in vorbestimmten Zeitabständen automatisch vor.

Wenn an Stelle eines einachsigen Neigungsmessers 25 ein zweiachsiger Neigungsmesser 25 eingesetzt wird. der in zwei senkrecht zueinander verlaufenden Meßachsen arbeitet, ist eine Umschlagsmessung weniger erforderlich, so daß sich die Zahl der erforderlichen Stützpunkte um sechs verringert.

An Stelle des beim Ausführungsbeispiel verwendeten Beschleunigungsmessers können auch andere Neigungsmesser zum Einsatz kommen, wie z. B. Pendelneigungsmesser oder Elektrolytlibellen

Mit Hilfe des Rate-Kreiselmeßgerätes kann im Bedarfsfall die Lage der Meßachsen relativ zur Nordrichtung bestimmt werden. Die erforderlichen Nullpunkt-Korrekturen und Neubestimmungen des Skalenfaktors für dieses Meßgerät erfolgen in gleicher Weise wie oben erläutert jeweils durch Umschlagsmessungen mit genau definierten Drehwinkeln.

## Patentansprüche

1. Neigungsmeßvorrichtung für die Bestimmung der Neigung von neigungssensiblen Bauwerken, Anlagen oder Maschinen, mit einer Basis, auf der eine mindestens einen Neigungsmesser tragende Trägerplatte mittels dreier Stützfüße in jeweils um 180° gegeneinander verdrehten Meßlagen in Richtung von Meßachsen X+ und X- bzw. Y+ und Y- abstützbar ist, wobei der Basis Führungseinrichtungen zugeordnet sind, die die Stützfüße der Trägerplatte beim Aufsetzen auf die Stützflächen der Basis in definierte reproduzierbare Stellungen führen,
**dadurch gekennzeichnet**,
- daß die Trägerplatte als Drehtisch (7) ausgebildet ist, der an der Basis (1) um eine Drehachse drehbar, relativ zur Drehachse kippbar und in Längsrichtung der Drehachse heb- und absenkbar gelagert ist, wobei dem Drehtisch (7) motorische Dreh- (11, 12) und Hubeinrichtungen (8) zugeordnet sind,
- daß die Basis (1) weitere Stützflächen (21) zur Abstützung des Drehtisches (7) in zwei weiteren um 180° gegeneinander verdrehten Meßlagen in Richtung von Kalibriermeßachsen K+ und K- aufweist, die mit den Meßachsen X+ und X- bzw. Y+ und Y- einen Winkel von insbesondere 45° bilden, wobei die in der Flucht der Kalibriermeßachsen K+ und K- liegenden Stützflächen (21) gegenüber allen anderen in einer gemeinsamen Ebene liegenden Stützflächen (21) um ein festes Maß angehoben bzw. abgesenkt sind und parallel zu der gemeinsamen Ebene verlaufen,
- und daß die Dreh- (11, 12) und Hubeinrichtung (8) und der Neigungsmesser (25) zur Steuerung der Bewegung des Drehtisches (7) in den verschiedenen Meßlagen und zur Registrierung und Auswertung der vom Neigungsmesser (25) gemessenen Meßwerte an einen Mikroprozessor (26) angeschlossen sind.

2. Vorrichtung nach Anspruch 1, dadurch gekennzeichnet, daß der Neigungsmesser (25) zwei rechtwinklig zueinander verlaufende Meßachsen aufweist.

3. Vorrichtung nach den Ansprüchen 1 oder 2, dadurch gekennzeichnet, daß zusätzlich zu dem Neigungsmesser (25) auf dem Drehtisch (7) ein Rate-Kreiselmeßgerät (25a) für die Nordbestimmung angeordnet ist.

4. Vorrichtung nach den Ansprüchen 1 oder 2, dadurch gekennzeichnet, daß der oder die Neigungsmesser (25) als Beschleunigungsmesser ausgebildet sind.

5. Vorrichtung nach Anspruch 1, dadurch gekennzeichnet, daß der Drehtisch (7) die Form einer runden Kreisscheibe hat und am Außenumfang mit einer Verzahnung (10) versehen ist, in die das Antriebsritzel (11) eines Drehmotors (12) eingreift, der an einem parallel zur Ebene des Drehtisches (7) verschwenkbaren Auslegerarm (13) gelagert ist, der zusammen mit dem Drehtisch (7) anhebbar und absenkbar ist und derart gegenüber der Basis geführt ist, daß die Lage des Drehmotors (12) in Bezug auf die Drehachse des Drehtisches (7) in der angehobenen Stellung fixiert ist und in der abgesenkten Stellung Spiel hat.

6. Vorrichtung nach Anspruch 1, dadurch gekennzeichnet, daß die Führungseinrichtungen an der Unterseite des Drehtisches nach unten vorstehende Fixierstifte (18) aufweisen, die in an der Basis (1) befindliche, den einzelnen Meßlagen zugeordnete Nuten (19) eingreifen und den Drehtisch (7) exakt in der der jeweiligen Meßlage zugeordneten Drehstellung fixieren.

7. Vorrichtung nach Anspruch 6, dadurch gekennzeichnet, daß an der Unterseite des Drehtisches (7) auf den Umfang verteilte Meßmarken (22) zur optischen Abtastung der Drehlage angeordnet sind.

8. Vorrichtung nach den Ansprüchen 6 und 7, dadurch gekennzeichnet, daß die optische Meßeinrichtung zwei der Basis (1) zugeordnete Reflektionslichtschranken (23) und einen darüber angeordneten Blendenring (24) mit zwei Lichtspalten (24a) aufweist.

9. Vorrichtung nach Anspruch 1, dadurch gekennzeichnet, daß die Stützfüße (20) des Drehtisches (7) kugelförmig ausgebildete untere Endflächen haben und die Stützflächen (21) der Basis als geläppte Stirnflächen von Stiften (22) ausgebildet sind.

10. Vorrichtung nach Anspruch 1, dadurch gekennzeichnet, daß die Hubeinrichtung (8) einen mittels eines Hubmotors (8c) verschwenkbaren Hebel (8a) aufweist, der an der Basis (1) gelagert ist und von unten auf einen mit dem Drehtisch (7) verbundenen Achskörper (2) einwirkt, der in Richtung der Drehachse des Drehtisches (7) verschiebbar in der Basis (1) gelagert ist.

11. Vorrichtung nach Anspruch 10, dadurch gekennzeichnet, daß der Achskörper (2) hohl ausgebildet ist und als Installationskanal für zur Oberseite des Hubtisches (7) führende elektrische Leitungen dient.

12. Vorrichtung nach Anspruch 11, dadurch gekennzeichnet, daß der Basis (1) Begrenzungsschalter (9) zugeordnet sind, die die Hubbewegungen der Hubeinrichtung (8) nach oben und unten begrenzen.

13. Vorrichtung nach Anspruch 1, dadurch gekennzeichnet, daß dem Neigungsmesser (25) ein Spannungs-Frequenzkonverter (27) für die Analog-Digital-Umsetzung und ein 16-Bit-Zähler (28) zugeordnet sind.

14. Vorrichtung nach Anspruch 1 und 13, dadurch gekennzeichnet, daß der Mikroprozessor (26) der Spannungsfrequenzkonverter (27) und der 16-Bit-Zähler (28) im Schutzgehäuse der Vorrichtung angeordnet sind.

15. Vorrichtung nach Anspruch 14, dadurch gekennzeichnet, daβ der Mikroprozessor (24) für die Ausgabe der ermittelten Meßwerte und für die Entgegennahme von Steuerungssignalen eine serielle RS-232 Schnittstelle aufweist.

16. Verfahren für die Kalibrierung des Skalenfaktors an Neigungsmeßgeräten, insbesondere an Vorrichtungen nach einem der Ansprüche 1 bis 15, dadurch gekennzeichnet, daβ zunächst durch Umschlagsmessungen in den Meßachsen X+ und X- bzw. Y+ und Y- der Nullpunktfehler bestimmt wird und daβ anschließend durch eine Umschlagmessung in Kalibriermeßachsen K+ mit an dem Meßgerät fest einstellbarer, bekannter positiver Neigung und K- mit an dem Meßgerät fest einstellbarer, bekannter negativer Neigung der Skalenfaktor (sk) anhand des bekannten Nullpunktfehlers, der bekannten Neigungen und der gemessenen Werte neu bestimmt wird.

17. Verfahren nach Anspruch 16, dadurch gekennzeichnet, daβ die Kalibriermeßachse K+ in einem Winkel von insbesondere 45° zu den Meßachsen X+ und X- bzw. Y+ und Y- verläuft und daβ vor der Neubestimmung des Skalenfaktors (sk) die in den Meßachsensystemen X+ bzw. Y+ gemessenen Nullpunktabweichungen in das Kalibriermeßachsensystem K+ transformiert werden.

## Claims

1. An inclination measuring apparatus for determining the inclination of structures, installations or machines which are sensitive to inclination, comprising a base on which a carrier plate carrying at least one inclination measuring device can be supported by means of three support feet in respective measuring positions which are turned through 180° relative to each other in the direction of measuring axes X+ and X-, and Y+ and Y- respectively, wherein associated with the base are guide devices which guide the support feet of the carrier plate when fitted on to the support surfaces of the base into defined reproducible positions,
characterised in that
- the carrier plate is in the form of a turntable (7) which is mounted on the base (1) rotatably about an axis of rotation, tiltably relative to the axis of rotation and liftably and lowerably in the longitudinal direction of the axis of rotation, wherein associated with the turntable (7) are motor-actuated rotating (11, 12) and lifting (8) devices,
- the base (1) has further support surfaces (21) for supporting the turntable (7) in two further measuring positions which are turned through 180° relative to each other in the direction of calibration measuring axes K+ and K- which form an angle of in particular 45° with the measuring axes X+ and X-, and Y+ and Y- respectively, wherein the support surfaces (21) which are in alignment with the calibration measuring axes K+ and K- are raised or lowered by a fixed amount relative to all other support surfaces (21) in a common plane, and extend parallel to the common plane, and
- the rotating (11, 12) and the lifting (8) devices and the inclination measuring device (25) are connected to a microprocessor (26) for control of the movement of the turntable (7) in the various measuring positions and for recording and evaluation of the measurement values measured by the inclination measuring device (25).

2. Apparatus according to claim 1 characterised in that the inclination measuring device (25) has two measuring axes which extend at a right angle to each other.

3. Apparatus according to claim 1 or claim 2 characterised in that in addition to the inclination measuring device (25) a rate gyro measuring device (25a) for determining North is arranged on the turntable (7).

4. Apparatus according to claim 1 or claim 2 characterised in that the inclination measuring device(s) (25) is in the form of an accelerometer.

5. Apparatus according to claim 1 characterised in that the turntable (7) is in the form of a round disc and is provided at the outside periphery with a tooth arrangement (10) into which engages the drive pinion (11) of a rotary motor (12) mounted on a cantilever arm (13) which is pivotable parallel to the plane of the turntable (7) and which can be raised and lowered together with the turntable (7) and is guided relative to the base in such a way that the position of the rotary motor (12) in relation to the axis of rotation of the turntable (7) is fixed in the lifted position and has play in the lowered position.

6. Apparatus according to claim 1 characterised in that the guide means at the underside of the turntable have downwardly projecting fixing pins (18) which engage into grooves (19) provided on the base (1) and associated with the individual measuring positions and which fix the turntable (7) exactly in the rotary position associated with the respective measuring position.

7. Apparatus according to claim 6 characterised in that arranged at the underside of the turntable (7) are measuring marks (22) which are distributed around the periphery for optical sensing of the rotary position.

8. Apparatus according to claims 6 and 7 characterised in that the optical measuring device has two reflection light barrier means (23) associated with the base (1) and a screening ring (24) arranged thereabove and having two light openings (24a).

9. Apparatus according to claim 1 characterised in that the support feet (20) of the turntable (7) have bottom end surfaces which are of a spherical configuration and the support surfaces (21) of the base are in the form of lapped end faces of pins (22).

10. Apparatus according to claim 1 characterised in that the lifting device (8) has a lever (8a) which is pivotable by means of a lift motor (8c) and which is mounted on the base (1) and which acts from below on an axis body (2), the axis body being connected to the turntable (7) and being mounted in the base (1) displaceably in the direction of the axis of rotation of the turntable (7).

11. Apparatus according to claim 10 characterised in that the axis body (2) is hollow and serves as an installation passage for electric lines leading to the top side of the turntable (7).

12. Apparatus according to claim 11 characterised in that associated with the base (1) are limit switches (9) which limit the lift movements of the lifting device (8) upwardly and downwardly.

13. Apparatus according to claim 1 characterised in that associated with the inclination measuring device (25) are a voltage-frequency converter (27) for analog-digital conversion and a 16-bit counter (28).

14. Apparatus according to claims 1 and 13 characterised in that the microprocessor (26), the voltage-frequency converter (27) and the 16-bit counter (28) are arranged in the protective casing of the apparatus.

15. Apparatus according to claim 14 characterised in that the microprocessor (24) has a serial RS-232 interface for output of the measurement values ascertained and for receiving control signals.

16. A method of calibrating the scale factor on inclination measuring instruments, in particular on apparatuses as set forth in one of claims 1 to 15, characterised in that the zero point error is firstly determined by transition measurements in the measuring axes X+ and X- and Y+ and Y- respectively, and that then the scale factor (sk) is freshly determined by transition measurement in calibration measuring axes K+ with known positive inclination which can be fixedly set at the measuring instrument and K- with known negative inclination which can be fixedly set at the measuring instrument, by means of the known zero point error, the known inclinations and the measured values.

17. A method according to claim 16 characterised in that the calibration measuring axis K+ extends at an angle of in particular 45° relative to the measuring axes X+ and X-, and Y+ and Y- respectively, and that prior to the operation of freshly determining the scale factor (sk) the zero point deviations measured in the measuring axis systems X+ and Y+ respectively are transformed into the calibration measuring axis system K+.

## Revendications

1. Dispositif de mesure de l'inclinaison pour déterminer l'inclinaison de constructions d'installations ou de machines sensibles aux inclinaisons, du type comportant une base sur laquelle au moins une plaque de support portant un inclinomètre peut prendre appui à l'aide de trois pieds d'appui, dans trois positions de mesure décalées en rotation de 180° les uns par rapport aux autres, dans la direction d'axes de mesure X+ et X- ou Y+ et Y-, à la base étant associés des dispositifs-guides qui amènent les pieds d'appui de la plaque de support lors de la prise d'appui sur les surfaces d'appui de la base dans des positions définies reproductibles, caractérisé en ce
- que la plaque de support est réalisée sous forme d'une table rotative (7) qui est montée à sa base (1) rotative autour d'un axe de rotation, pivotant par rapport à l'axe de rotation et de façon à pouvoir être levée et abaissée, des dispositifs d'entraînement en rotation (11, 12) et de levage (8) étant associés à la table rotative (7),
- que la base (1) comprend d'autres surfaces d'appui (21) pour le support de la table rotative (7) dans deux autres positions de mesure décalées en rotation de 180° l'une par rapport à l'autre, dans la direction d'axes de mesure de calibrage K+ et K-, qui forment avec les axes de mesure X+ et X- ou Y+ et Y- un angle d'environ 45°, les surfaces d'appui (21) se trouvant en alignement avec les axes de mesure de calibrage K+ et K- étant soulevées ou abaissées d'un degré fixe par rapport à toutes les autres surfaces d'appui dans un plan commun et s'étendant parallèlement au plan commun,
- et que le dispositif d'entraînement en rotation (11, 12) et de levage (8) et l'inclinomètre (25) sont reliés à un microprocesseur (26) pour la commande du mouvement de la table rotative (7) dans les différentes positions de mesure et pour l'enregistrement et l'exploitation des valeurs de mesure mesurées par l'inclinomètre (25).

2. Dispositif selon la revendication 1, caractérisé en ce que l'inclinomètre (25) comprend deux axes de mesure qui s'étendent perpendiculairement l'un à l'autre.

3. Dispositif selon l'une des revendications 1 ou 2, caractérisé en ce que, supplémentairement à l'inclinomètre (25), un appareil de mesure gyroscopique de la fréquence d'impulsions (25a) est monté sur la table rotative (7) pour la détermination du nord.

4. Dispositif selon l'une des revendications 1 ou 2, caractérisé en ce que l'inclinomètre (25) est réalisé sous forme d'un accéléromètre.

5. Dispositif selon la revendication 1, caractérisé en ce que la table rotative (7) présente la forme d'un disque circulaire et comporte à son pourtour une denture (10) dans laquelle s'engage le pignon d'entraînement (11) d'un moteur rotatif (12) qui est monté sur un arbre en saillie (13) pivotant parallèlement au plan de la table rotative (7) et susceptible d'être levé et abaissé ensemble avec la table rotative (7) et guidé par rapport à la base de telle façon que la position du moteur rotatif (12) par rapport à l'axe de rotation de la table rotative (7) soit fixe dans la position levée et présente un jeu dans la position abaissée.

6. Dispositif selon la revendication 1, caractérisé en ce que le dispositif de guidage sur le côté inférieur de la table rotative comporte des goupilles de fixation (18) faisant saillie vers le bas et qui s'engagent dans des rainures (19) associées aux différentes positions de mesure et se trouvant sur la base (1) et fixent la table rotative (7) exactement dans la position rotative associée à une position de mesure respective.

7. Dispositif selon la revendication 6, caractérisé en ce que, sur la face ou côté inférieur de la table rotative (7) sont disposées des marques de mesure (32) pour un balayage optique de la position de rotation, qui sont réparties le long du pourtour.

8. Dispositif selon les revendications 6 et 7, caractérisé en ce que le dispositif de mesure optique comprend deux barrières de lumière de réflexion (23) associées à la base (1) et une bague de diaphragme (24) avec deux fentes de lumière (24a), qui est disposée au-dessus de ces barrières.

9. Dispositif selon la revendication 1, caractérisé en ce que les pieds d'appui (20) de la table rotative (7) comprennent des surfaces d'extrémité en forme de sphère et les surfaces d'appui (21) de la base sont configurées sous forme de surfaces frontales lobées de goupilles (22).

10. Dispositif selon la revendication 1, caractérisé en ce que le dispositif de levage (8) comprend un levier (8a) pivotant à l'aide d'un moteur de levage (8c) et qui est placé sur la base (1) et agit d'en bas sur un corps d'axe (2) relié à la table rotative (7) et monté coulissant dans la base (1), en direction de l'axe de rotation de la table rotative (7).

11. Dispositif selon la revendication 10, caractérisé en ce que le corps d'axe (2) est creux et sert de canal d'installation pour les lignes électrique s'étendant au côté supérieur de la table rotative (7).

12. Dispositif selon la revendication 11, caractérisé en ce que des interrupteurs ou commutateurs de limitation (9) sont associés à la base (1), qui limitent les mouvements de levage du dispositif de levage (8) vers le haut et vers le bas.

13. Dispositif selon la revendication 1, caractérisé en ce qu'à l'inclinomètre (25) sont associés un convertisseur tension-fréquence (27) pour la conversion analogique-numérique et un compteur à 16 bits (28).

14. Dispositif selon les revendications 1 et 13, caractérisé en ce que le microprocesseur (26), le convertisseur tension-fréquence (27) et le compteur à 16 bits (28) sont disposés dans le boîtier de protection du dispositif.

15. Dispositif selon la revendication 14, caractérisé en ce que le microprocesseur (24) comprend une interface de série RS-232 pour l'émission des valeurs de mesure déterminée et pour la réception des signaux de commande.

16. Procédé pour le calibrage du facteur de cadrage ou d'échelle pour appareil de mesure d'inclinaison, notamment pour des dispositifs selon l'une des revendications 1 à 15, caractérisé en ce que l'on détermine tout d'abord par mesure réversible l'erreur de point zéro dans les axes de mesure X+ et X- ou Y+ et Y- et en ce que l'on détermine ensuite nouvellement par une mesure réversible dans les axes de mesure de calibrage K+ avec une inclinaison positive connue pouvant être établie de façon fixe sur l'appareil de mesure et K- avec une inclinaison négative connue pouvant être établie de façon fixe sur l'appareil de mesure, le facteur de cadrage (sk) à l'aide de l'erreur de point zéro connue, des inclinaisons connues et des valeurs mesurées.

17. Procédé selon la revendication 16, caractérisé en ce que l'axe de mesure de calibrage K+ s'étend selon un angle de notamment 45° par rapport aux axes de mesure X+ et X- ou Y+ et Y- et qu'avant la détermination nouvelle du facteur de cadrage (sk), les écarts du point zéro mesurés dans les systèmes d'axes de mesure X+ ou Y+ sont transformés dans le système d'axes de mesure de calibrage K+.
